Europäisches Patentamt

European Patent Office

Office européen des brevets

(11) Numéro de publication : **0 486 396 A1**

# (12) DEMANDE DE BREVET EUROPEEN

(21) Numéro de dépôt : **91403060.6**

(22) Date de dépôt : **14.11.91**

(51) Int. Cl.⁵ : **B23K 1/18**

(30) Priorité : **16.11.90 FR 9014278**

(43) Date de publication de la demande :
**20.05.92 Bulletin 92/21**

(84) Etats contractants désignés :
**AT BE CH DE DK ES FR GB GR IT LI LU NL SE**

(71) Demandeur : **EGIDE S.A.**
**Z.A. Pissaloup**
**F-78190 Trappes (FR)**

(72) Inventeur : **Catheline, Marc, Résidence des Aulnais**
**67, rue Brossolette, Appt. C 64**
**F-92320 Chatillon sous Bagneux (FR)**
Inventeur : **Dody, Jean-Noel**
**29, avenue du Château**
**F-78370 Plaisir (FR)**
Inventeur : **Maquaire, Jean-Pierre, Les Sources**
**10, rue Général Leclerc**
**F-78430 Louveciennes (FR)**

(74) Mandataire : **Thibon-Littaye, Annick**
**11 rue de l'Etang**
**F-78160 Marly le Roi (FR)**

(54) **Procédé de brasure d'un élément transversalement à une paroi, ensemble de jonction permettant sa mise en oeuvre, boîtier pour composant électronique.**

(57) la présente invention concerne un procédé brasure d'un élément transversalement à une paroi (1). Il consiste à ménager dans ladite paroi (1), au voisinage d'un orifice (2) de réception dudit élément (3), un réservoir (8) destiné à recevoir une préforme (9) de brasure solide et débouchant dans ledit orifice (2) ; à positionner avec jeu (7) ledit élément (3) dans ledit orifice de passage (2) ; à placer dans ledit réservoir (8) une préforme de brasure solide (9) ; et à provoquer la liquéfaction et la diffusion capillaire de la brasure dans ledit jeu (7).

Fig. 1

EP 0 486 396 A1

La présente invention concerne un procédé de brasure d'un élément transversalement à une paroi, un ensemble de jonction permettant la mise en oeuvre de ce procédé.

L'invention s'applique plus particulièrement à la réalisation d'une jonction hermétique, électriquement isolante entre un conducteur électrique et une paroi en un matériau électriquement conducteur qu'il traverse.

Dans ce cadre, l'invention concerne notamment la réalisation d'un boîtier pour composants électroniques.

La brasure d'un élément transversalement à une paroi pose généralement le problème de l'apport en brasure au niveau des surfaces à assembler. En effet, si la brasure n'assure pas la liaison de toutes les portions de surface de l'élément transversal avec la surface de l'intérieur d'un orifice de réception dans lequel il est engagé, cela nuit à la résistance mécanique de l'assemblage réalisé.

Par ailleurs dans le cas d'un objectif d'herméticité d'une jonction entre un élément traversant une paroi et cette même paroi, les discontinuités de contact de la brasure entre toutes les portions de surface en regard risquent de conduire à un défaut d'herméticité de la jonction.

De plus, dans ce cas également l'apport de brasure est particulièrement complexe dans la mesure où les surfaces à braser entre elles ne sont pas directement accessibles.

Pour cela une solution généralement utilisée consiste à employer une préforme annulaire de brasure solide dans laquelle est engagé l'élément traversant préalablement à son introduction dans l'orifice de réception, puis à provoquer la liquéfaction de la préforme de brasure en appliquant simultanément une pression transversale sur l'élément traversant du côté de la paroi où est située la préforme de brasure de sorte à entraîner la brasure liquide dans l'interstice susbsistant entre l'élément et l'orifice. Cette pression est nécessaire pour donner à l'élément traversant sa position définitive, dans la mesure où l'épaisseur de la préforme de brasure solide, induit un décalage dans le positionnement initial de l'élément.

De plus une telle solution conduit à dimensionner la préforme de brasure solide dans des proportions supérieures au volume de brasure nécessaire, dans la mesure où lors de la pression, une quantité de brasure liquide est éjectée de l'orifice par son ouverture opposée à celle par laquelle est introduit l'élément, ce qui non seulement nuit à la rentabilité économique d'un tel système, mais provoque des salissures sur le produit obtenu.

En outre cette solution ne permet pas d'assurer que toutes les portions de surface de l'élément soient reliées par brasure à toutes les portions de surface de l'orifice.

En outre les préformes de brasures solides comportent généralement des impuretés nuisibles à la résistance mécanique et à l'herméticité de la jonction réalisée et qui sont introduites lors de la liquéfaction dans l'interstice entre l'élément et l'orifice.

La présente invention a donc notamment pour but de remédier aux inconvénients décrits ci-dessus.

Selon sa caractéristique principale la présente invention concerne un procédé de brasure d'un élément transversalement à une paroi, caractérisé en ce qu'il consiste :

– à ménager dans ladite paroi, au voisinage d'un orifice de réception dudit élément, un réservoir destiné à recevoir une préforme de brasure solide et débouchant dans ledit orifice ;

– à positionner avec jeu ledit élément dans ledit orifice de réception ;

– à placer dans ledit réservoir une préforme de brasure solide ;

– et à provoquer la liquéfaction et la diffusion capillaire de la brasure dans ledit jeu.

Au moyen d'un tel procédé, l'élément à braser à la paroi peut être placé dans sa position définitive avant que la brasure ne soit introduite, ce qui présente un avantage certain, notamment dans le cas où des contraintes de précision de positionnement sont requises pour la jonction à réaliser. De plus, on constate que par effet de capillarité lors de la liquéfaction de la préforme de brasure solide, les impuretés qu'elle contient, restent dans le réservoir et ne vont pas polluer la brasure réalisée.

En outre, la diffusion capillaire de la brasure liquéfiée évite tout débordement de brasures hors de l'orifice, ce qui d'une part conduit à une économie en matériaux de brasures et d'autre part à une jonction obtenue plus propre.

Avantageusement, ledit réservoir est ménagé de sorte à présenter une fois l'élément positionné dans l'orifice, un accès de chargement autorisant l'introduction d'une préforme de brasure solide par la face de la paroi par laquelle est engagé ledit élément pour son positionnement dans l'orifice.

Selon une caractéristique avantageuse de l'invention, le réservoir est dimensionné de manière à recevoir une préforme de brasure solide, elle-même dimensionnée pour permettre le remplissage du jeu entre ledit élément et ledit orifice et obtenir une jonction étanche.

Elle permet une économie appréciable en matériaux de brasures, dans la mesure où il suffit désormais de dimensionner cette préforme au volume nécessaire au remplissage du jeu entre l'élément et l'orifice.

De manière particulièrement avantageuse, selon le procédé de l'invention, on répète l'opération de liquéfaction et de diffusion avec une nouvelle charge de brasure solide jusqu'à ce que la subsistance d'une quantité de brasure dans le réservoir témoigne du remplissage intégral du jeu.

Au moyen d'un tel procédé, il est désormais possible de contrôler la qualité de la brasure réalisée dans la mesure où on s'assure par la subsistance d'une certaine quantité de brasures dans le réservoir à la fin de l'opération, que le jeu entre l'élément et l'orifice est intégralement comblé par du matériau de brasures, assurant ainsi contact sur toutes les portions de surface de l'élément et de l'orifice.

Au cas où l'on constate que le réservoir est intégralement vidé à la fin de l'opération de diffusion, l'accès de chargement permet de réintroduire une nouvelle charge de brasure solide afin d'assurer un complément en remplissage du jeu, ce qui, dans les solutions proposées antérieurement était impossible dans la mesure où la préforme de brasure solide devait être placée préalablement au positionnement définitif de l'élément.

Un autre but de l'invention est d'appliquer ce procédé à la réalisation d'une jonction hermétique, électriquement isolante entre un conducteur électrique et une paroi en un matériau électriquement conducteur, notamment dans le cadre de la fabrication de boîtiers pour composants électroniques.

L'invention a également pour but de proposer un ensemble de jonctions comportant une paroi qui elle-même comprend un orifice de réception d'un élément traversant transversalement cette paroi et permettant la mise en oeuvre du procédé selon l'invention.

Cet ensemble de jonctions comporte avantageusement un élément traversant constitué pour être positionné avec jeu dans l'orifice de réception de la paroi, et cette paroi comporte avantageusement un réservoir présentant sur la face par laquelle est introduit ledit élément traversant, un accès de chargement autorisant l'introduction d'une préforme de brasure solide.

Selon une caractéristique particulièrement avantageuse de l'invention, le réservoir est réalisé par évidement de matières à partir de la face de ladite paroi par laquelle est introduit l'élément traversant, cet évidement débouchant dans l'orifice de réception.

On obtient ainsi une réalisation particulièrement simple du réservoir, dans la mesure où l'on réalise par enlèvement de matières, un évidement dans la face de la paroi, et que cet évidement constitue le réservoir en ménageant simultanément des moyens d'accès pour l'introduction de la préforme de brasure solide.

Dans le cadre de l'application à la réalisation d'une jonction hermétique électriquement isolante entre un conducteur électrique et une paroi en un matériau électriquement conducteur, l'élément traversant de l'ensemble de jonction selon l'invention comporte un conducteur électrique entouré par une perle en un matériau isolant, elle-même entourée par un fourreau en un matériau conducteur propre à être brasé à ladite paroi en traversant ledit orifice.

Généralement, la perle est une perle de verre ou de céramique et son assemblage au conducteur électrique et au fourreau est réalisé au préalable par fusion de cette perle de verre de façon à constituer un élément traversant, assurant toutes les conditions d'herméticité entre ces constituants.

Selon une autre caractéristique de l'ensemble de jonction de l'invention, le fourreau présente une longueur au moins égale à l'épaisseur de la paroi, et un changement de section constituant une tête propre à prendre appui sur la face de ladite paroi par laquelle il est introduit dans l'orifice pour son positionnement.

Le positionnement de l'élément traversant dans la paroi préalablement à son assemblage par brasure, est ainsi considérablement simplifié dans la mesure où le changement de section permet d'engager l'élément dans l'orifice jusqu'à ce que sa tête vienne en butée sur la paroi.

La longueur du fourreau par rapport à l'épaisseur de la paroi est déterminée en fonction notamment des caractéristiques thermiques de la paroi et du diamètre du conducteur électrique.

En effet et notamment pour assurer une bonne tenue à la liaison perle/conducteur, la longueur du fourreau est avantageusement plus importante pour un conducteur de diamètre plus grand.

Cette notion de longueur du fourreau par rapport à l'épaisseur de la paroi varie également en fonction des contraintes thermiques déterminant l'épaisseur de la paroi.

Dans le cas d'une épaisseur de paroi importante en raison de ses caractéristiques thermiques, le fourreau sera généralement plus court que l'épaisseur de la paroi car sa longueur sera quant à elle fonction des caractéristiques techniques de tenue de la liaison perle/conducteur.

Par contre pour une paroi fine, le fourreau peut être plus long que l'épaisseur de la paroi si le diamètre du conducteur l'exige.

Selon une caractéristique particulièrement avantageuse de l'ensemble de jonctions, le réservoir présente une forme allongée dont une extrémité débouche dans ledit orifice, ceci afin de permettre une économie supplémentaire en matériaux de brasures en diminuant la partie de celui-ci diffusée par capillarité sur les parois du réservoir.

Un autre but de la présente invention est de proposé un boîtier pour composants électroniques comportant au moins une jonction obtenue à partir d'un ensemble de jonctions selon la procédé de l'invention, et formant une enceinte fermable, le réservoir étant constitué d'un évidement de matière ménagé sur la face extérieure d'une paroi de l'enceinte, de façon à permettre un positionnement aisé de l'élément de brasure par l'extérieur ainsi qu'une éventuelle introduction de nouvelles charges en brasures solides par l'extérieur du boîtier.

Dans le cadre de cette application aux boîtiers électroniques, on prévoit de ménager sur les parois correspondantes, autant de réservoirs qu'il y a d'orifices prévus pour le passage de conducteur électrique assurant une liaison entre l'extérieur et l'intérieur du boîtier.

Au moyen de l'invention le contrôle des jonctions réalisées sur un tel boîtier est particulièrement aisé dans la mesure où il suffit de contrôler qu'il subsiste dans chacun des réservoirs associés à un orifice, une certaine quantité de brasures pour s'assurer que toutes les jonctions réalisées soient hermétiques.

L'intérêt pour une telle application se trouve d'autant plus justifié que les matériaux de brasures utilisés sont généralement très onéreux, par exemple en réalisant des brasures or/étain, et que l'intérieur du boîtier obtenu doit être exempt de toute salissure provoquée par des coulures de brasures et des projections de brasures comme c'était le cas par des techniques antérieures.

Afin d'assurer une bonne diffusion par capillarité de la brasure liquéfiée, on prévoit avantageusement selon l'invention que l'orifice de réception et l'élément traversant soient tous deux de section courbe, afin d'éviter la présence d'angles susceptibles de nuire à une bonne diffusion capillaire.

En pratique, et notamment pour l'application aux boîtiers électroniques, l'orifice de passage et l'élément traversant sont tous deux de section circulaire.

On décrira maintenant plus en détail une forme de réalisation particulière de l'invention qui en fera mieux comprendre les caractéristiques essentielles et les avantages, étant entendu toutefois que cette forme de réalisation est choisie à titre d'exemple et qu'elle n'est nullement limitative. Sa description est illustrée par les dessins annexés, dans lesquels :

   – la figure 1 représente en coupe, un ensemble de jonctions selon l'invention appliqué à la fabrication de boîtiers pour composants électroniques ;
   – la figure 2 représente une vue de face de l'ensemble de jonctions représenté à la figure 1 ;
   – la figure 3 représente une variante de réalisation du réservoir d'apport de brasures solides selon l'invention.
   – et la figure 4 représente en coupe la variante représentée à la figure 3 munie de l'ensemble de jonction.

Pour des raisons de clarté les éléments communs aux figures seront désignés par les mêmes références.

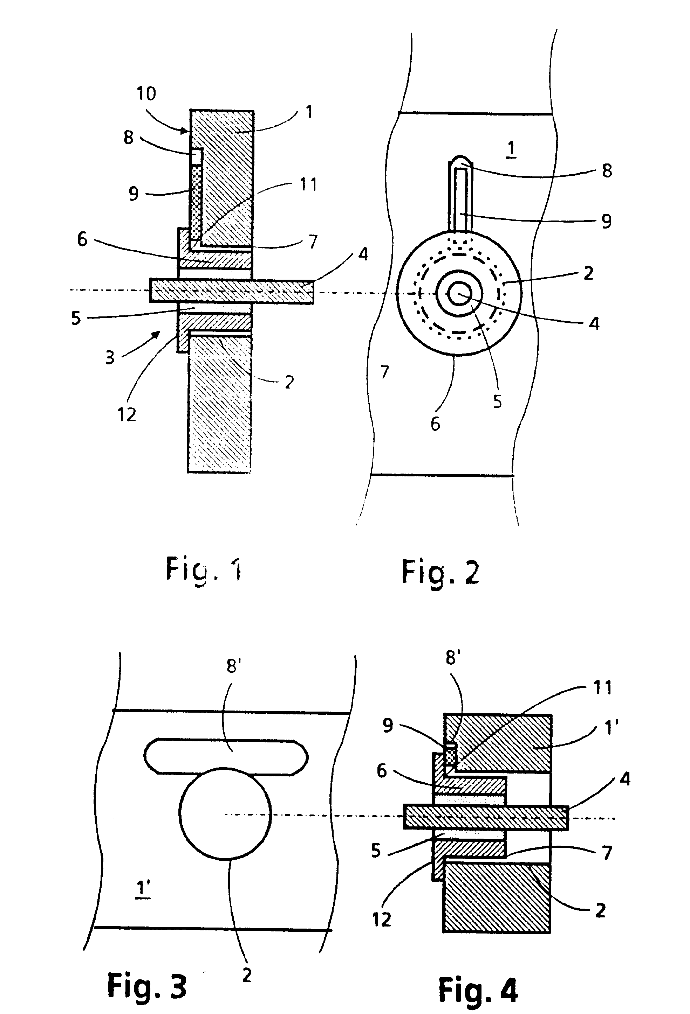

L'ensemble de jonctions représenté aux figures 1 et 2 comporte une paroi 1 en un matériau électriquement conducteur, constitué par exemple d'une des parois d'un boîtier pour composants électroniques, dans laquelle est ménagé un orifice de passage 2 d'un élément traversant 3, lui-même constitué d'une conducteur électrique 4 destiné à assurer une liaison électrique entre l'intérieur et l'extérieur du boîtier, entouré d'une perle de verre ou de céramique 5, elle-même entourée d'un fourreau métallique 6.

Les dimensions respectives de l'orifice de passage 2 et de l'élément traversant 6 sont telles qu'il subsiste un jeu 7 entre la surface périphérique externe du fourreau 6 et la surface périphérique interne de l'orifice 2, propre à assurer une bonne diffusion par capillarité de la brasure lors de sa liquéfaction.

Un réservoir 8 destiné à recevoir une préforme de brasure solide 9 est ménagé par évidement de matière dans une face 10 de la paroi 2 par laquelle doit être introduit l'élément traversant 3.

Le fourreau 6 présente un changement de section 11 propre à constituer une tête 12 de l'élément traversant destinée à venir en appui contre la face 10 de la paroi 1 lors du positionnement de l'élément traversant 3.

Le dimensionnement de la préforme 9 est tel qu'il permet lors de sa liquéfaction un remplissage complet du jeu 7 par diffusion capillaire.

Le réservoir 8 présente une forme allongée (figure 2) dont une extrémité débouche dans l'orifice 2 de la paroi 1.

Selon une variante de réalisation du réservoir représenté aux figures 3 et 4, le réservoir 8' débouche dans l'orifice 2 de la paroi 1', non pas par une de ses extrémités, mais par un de ses bords longitudinaux. Une telle forme de réalisation si elle présente l'inconvénient d'entraîner des pertes en matériaux de brasures par diffusion capillaire sur les surfaces du réservoir 8' légèrement plus importantes que dans le cas du réservoir 8 de la figure 2, permet, en fonction des contraintes de dimensionnement général de la paroi, et donc du boîtier pour composants électroniques, en fonction du nombre d'orifices nécessaires au passage de conducteurs, d'occuper une hauteur moins importante sur la paroi.

La figure 3 est une vue de face de la paroi seule alors que la figure 4 montre cette même paroi munie de l'élément traversant.

Pour effectuer la jonction hermétique entre l'élément traversant et la paroi, l'élément traversant 3 est tout d'abord positionné par introduction dans l'orifice de passage 2, la tête 6 venant en butée sur la paroi 10, puis l'on introduit dans le réservoir 8 une préforme de brasure solide 9 et l'on provoque sa liquéfaction et la diffusion capillaire de la brasure dans le jeu 7 par des moyens de chauffage appropriés.

Ces moyens de chauffage peuvent par exemple consister en un passage de l'ensemble de jonction dans un four. Dans le cas d'un boîtier pour composant électronique, c'est l'ensemble du boîtier qui sera passé au four une fois que le ou les réservoirs correspondant à des orifices de passage auront été chargés en brasures solides.

Une fois l'opération de liquéfaction et diffusion terminée, donc une fois l'ensemble de jonction sorti du four, on contrôle qu'il subsiste dans le réservoir 8 une quantité de brasure qui ne s'est pas diffusée par capillarité dans le jeu 7, témoignant que celui-ci est plein. Pour cela une simple vision de l'ouverture du réservoir permet de constater si la quantité de brasure contenue dans la préforme solide 9 a permis de remplir intégralement le jeu 7, ou s'il est nécessaire de repasser l'ensemble de jonctions une nouvelle fois au four après avoir réintroduit dans le réservoir 8, une nouvelle charge de brasure solide.

La variante représentée à la figure 4 montre une forme de réalisation dans laquelle le fourreau 6 est plus court que l'épaisseur de la paroi 1'. Cette variante peut correspondre au cas où les caractéristiques thermiques souhaitées pour la paroi conduisent à lui donner une épaisseur importante alors que les caractéristiques techniques de tenue de la liaison conducteur 4/perle 5 elles-mêmes fonction du diamètre du conducteur 4 fixent la longueur du fourreau 6.

Naturellement, l'invention n'est en rien limitée par les particularités qui ont été spécifiées dans ce qui précède ou par les détails du mode de réalisation particulier choisi pour illustrer l'invention. Toutes sortes de variantes peuvent être apportées à la réalisation particulière qui a été décrite à titre d'exemple et à ses éléments constitutifs sans sortir pour autant du cadre de l'invention. Cette dernière englobe ainsi tous les moyens constituant des équivalents techniques des moyens décrits ainsi que leurs combinaisons.

## Revendications

1. Procédé de brasure d'un élément (3) transversalement à une paroi (1), caractérisé en ce qu'il consiste :
   – à ménager dans ladite paroi (1), au voisinage d'un orifice (2) de réception dudit élément (3), un réservoir (8) destiné à recevoir une préforme de brasure solide (9) et débouchant dans ledit orifice (2) ;
   – à positionner avec jeu (7) ledit élément (3) dans ledit orifice de réception (2) ;
   – à placer dans ledit réservoir (8) une préforme de brasure solide (9) ;
   – et à provoquer la liquéfaction et la diffusion capillaire de la brasure dans ledit jeu (7).

2. Procédé de brasure selon la revendication 1, caractérisé en ce que ledit réservoir (8) est ménagé de sorte à présenter une fois l'élément (3) positionné dans ledit orifice (2), un accès de chargement autorisant l'introduction d'une préforme de brasure solide (9) par la face (10) de ladite paroi (1) par laquelle est engagé ledit élément (3) pour son positionnement dans l'orifice (2).

3. Procédé de brasure selon la revendication 1 ou 2, caractérisé en ce que ledit réservoir (8) est dimensionné de manière à recevoir une préforme de brasure solide (9), elle-même dimensionnée pour permettre le remplissage du jeu (7) entre ledit élément (3) et ledit orifice (2) et obtenir une jonction étanche.

4. Procédé de brasure selon l'une quelconque des revendications 1 à 3, caractérisé en ce qu'en outre on répète l'opération de liquéfaction et de diffusion avec une nouvelle charge de brasure solide (9) jusqu'à ce que la subsistance d'une quantité de brasure dans le réservoir (8) témoigne du remplissage intégral du jeu (7).

5. Application du procédé selon l'une quelconque des revendications 1 à 4 à la réalisation d'une jonction hermétique électriquement isolante entre un conducteur électrique (4) et une paroi (1) en un matériau électriquement conducteur, notamment dans le cadre de la fabrication de boîtier pour composant électronique.

6. Ensemble de jonction caractérisé en ce qu'il comporte une paroi (1) comprenant un orifice (2) de réception d'un élément (3) traversant transversalement ladite paroi (1), permettant la mise en oeuvre du procédé selon l'une quelconque des revendications 1 à 4.

7. Ensemble de jonction selon la revendication 6, caractérisé en ce qu'il comporte un élément traversant (3) constitué pour être positionné avec jeu (7) dans ledit orifice de réception (2).

8. Ensemble de jonction selon l'une des revendications 6 ou 7, caractérisé en ce que ladite paroi (1) comporte un réservoir (8) présentant sur la face (10) par laquelle est introduit ledit élément traversant (3), un accès de chargement autorisant l'introduction d'une préforme de brasure solide (9).

9. Ensemble de jonction selon l'une quelconque des revendications 6 et 8, caractérisé en ce que ledit réservoir (8) est réalisé par évidement de matières à partir de la face (10) de ladite paroi (1) par laquelle est introduit ledit élément (3), ledit évidement débouchant dans ledit orifice (2).

10. Ensemble de jonction selon l'une quelconque des revendications 6 à 9, caractérisé en ce que ledit élément traversant (3) comporte un conducteur électrique (4) entouré par une perle (5) en un matériau isolant, elle-même entourée par un fourreau (6) en un matériau conducteur propre à être brasé à ladite paroi (1) en traversant ledit orifice (2).

11. Ensemble de jonction selon la revendication 10, caractérisé en ce que ledit fourreau (6) présente une longueur au moins égale à l'épaisseur de ladite paroi (1).

12. Ensemble de jonction selon l'une des revendications 10 ou 11, caractérisé en ce que ledit fourreau (6) présente un changement de section (11) constituant une tête (12) propre à prendre appui sur la face (10) de ladite paroi (1) par laquelle il est introduit dans ledit orifice (2) pour son positionnement.

13. Ensemble de jonction selon l'une quelconque des revendications 6 à 12, caractérisé en ce que ledit réservoir (8) présente une forme allongée dont une extrémité débouche dans ledit orifice (2).

14. Boîtier pour composant électronique, caractérisé en ce qu'il comporte au moins une jonction obtenue à partir d'un ensemble de jonction selon l'une quelconque des revendications 6 à 13.

15. Boîtier selon la revendication 14, caractérisé en ce qu'il forme une enceinte fermable et en ce que le réservoir (8) est constitué d'un évidement de matières ménagé sur la face extérieure (10) d'une paroi (1) de l'enceinte.

**Fig. 1**

**Fig. 2**

**Fig. 3**

**Fig. 4**

**Office européen des brevets**

## RAPPORT DE RECHERCHE EUROPEENNE

Numero de la demande

EP 91 40 3060

### DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | PATENT ABSTRACTS OF JAPAN vol. 11, no. 175 (M-596)(2622) 5 Juin 1987 & JP-A-62 006 772 ( NIPPON PISTON RING CO LTD ) 13 Janvier 1987 * abrégé * | 1-3 | B23K1/18 |
| A | GB-A-1 478 448 (KABUSHIKI KAISHA DAINI SEIKOSHA) * le document en entier * | 1,5-7, 10-12, 14,15 | |
| A | FR-A-2 613 171 (SEPT DOLOY S.A.) * le document en entier * | 1,5-7, 10,14,15 | |

DOMAINES TECHNIQUES RECHERCHES (Int. Cl.5)

B23K
H01L
H05K

Le présent rapport a été établi pour toutes les revendications

| Lieu de la recherche | Date d'achèvement de la recherche | Examinateur |
|---|---|---|
| LA HAYE | 13 FEVRIER 1992 | HERBRETEAU D. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
................................................
& : membre de la même famille, document correspondant

EPO FORM 1503 03.82 (P0402)